# EUROPÄISCHE PATENTSCHRIFT

(11) **EP 2 373 521 B1**
(45) Veröffentlichungstag und Bekanntmachung des Hinweises auf die Patenterteilung: **01.11.2017**
(21) Anmeldenummer: 09760741.0
(22) Anmeldetag: 19.11.2009
(51) Int. Cl.: B60R 1/00

(54) **VORRICHTUNG ZUR ÜBERWACHUNG EINER UMGEBUNG EINES FAHRZEUGS**
DEVICE FOR MONITORING AN ENVIRONMENT OF A VEHICLE
DISPOSITIF DE SURVEILLANCE DES ALENTOURS D'UN VÉHICULE

(30) Priorität: 12.12.2008 DE 102008061760
(43) Veröffentlichungstag der Anmeldung: 12.10.2011
(73) Patentinhaber: Daimler AG, 70327 Stuttgart (DE)
(72) Erfinder: GLOGER, Joachim, 89346 Bibertal (DE)
(74) Vertreter: JENSEN & SON
(86) Internationale Anmeldenummer: PCT/EP2009/008234
(87) Internationale Veröffentlichungsnummer: WO 2010/066332

(56) Entgegenhaltungen:
- EP-A- 1 764 835
- EP-A- 1 765 002
- US-A1- 2008 043 113
- US-A1- 2008 252 729

## Beschreibung

Die Erfindung betrifft eine Vorrichtung zur Überwachung einer Umgebung eines Fahrzeugs nach den Merkmalen des Oberbegriffs des Patentanspruchs 1.

Nutzfahrzeuge zum Güter- oder Personentransport sind häufig durch große Fahrzeugabmessungen und eine geringe Übersichtlichkeit gekennzeichnet. Auch moderne Personenkraftwagen weisen aufgrund ihrer äußeren Gestalt häufig eine sehr geringe Übersichtlichkeit auf. Daraus resultiert, dass insbesondere ein Rangieren mit diesen Fahrzeugen für einen Fahrer sehr schwierig ist. Deshalb ist es vorteilhaft, Fahrzeuge und deren Umgebung aus einer Vogelperspektive auf einem Bildschirm darzustellen, so dass das Fahrzeug und dessen gesamte Umgebung für den Fahrer sichtbar sind.

Aus dem Stand der Technik sind verschiedene Verfahren und Vorrichtungen zu einer derartigen Überwachung und Darstellung einer Umgebung eines Fahrzeugs bekannt, wobei einem Fahrer des Fahrzeugs insbesondere ein Bild des Fahrzeugs und dessen Umgebung aus einer Vogelperspektive ausgegeben wird. Dadurch wird für den Fahrer eine verbesserte Rundumsicht geschaffen, die diesem als Assistenzfunktion bzw. Unterstützung während des Fahrbetriebes, beispielsweise bei einem Rangieren des Fahrzeugs, dient. Weiterhin können Unfälle vermieden werden, welche sich häufig aufgrund einer schlechten Rundumsicht, insbesondere bei großen und schwer überschaubaren Fahrzeugen, ereignen.

Aus dem Stand der Technik ist, wie in der DE 100 59 786 B4 beschrieben, eine Überwachungseinrichtung für ein Fahrzeug bekannt. Eine Einrichtung zur Überwachung einer nicht unmittelbar einsehbaren Umgebung eines Fahrzeugs und/oder zur vorausschauenden Überwachung der Fahrzeugbahn umfasst eine im Front- und/oder Heckbereich des Fahrzeugs angeordnete Kamera, eine Signalverarbeitungsvorrichtung und eine Anzeigevorrichtung im Blickfeld des Fahrers. Des Weiteren umfasst die Einrichtung Mittel zur Überführung der wenigstens einen Kamera in eine geschützte Ruhelage bei Nichtgebrauch und in wenigstens eine definierte Betriebslage bei Gebrauch und Mittel zur vorausschauenden Überwachung der Fahrbahn, auf der die Räder des Fahrzeugs rollen, wobei diese Mittel wenigstens eine Abtasteinrichtung am Fahrzeug zur Erfassung von Bodenunebenheiten umfassen, sowie eine Auswerteeinheit, die die Signale der wenigstens einen Abtasteinrichtung in Anzeigesignale und/oder Steuerbefehle für aktiv steuerbare Fahrzeugaggregate umwandelt. Die wenigstens eine Abtasteinrichtung der Mittel zur vorausschauenden Überwachung der Fahrbahn ist durch die wenigstens eine vorhandene Kamera zur Überwachung der nicht unmittelbar einsehbaren Umgebung eines Fahrzeugs gebildet, wobei die mit der wenigstens einen Kamera zusammenwirkenden Mittel zur Überführung der wenigstens einen Kamera in eine geschützte Ruhelage bei Nichtgebrauch und in wenigstens eine definierte Betriebslage bei Gebrauch eine Verschwenkeinrichtung zur vertikalen und/oder horizontalen Verschwenkung der wenigstens einen Kamera aufweisen.

Aus der EP 1 145 905 A2 ist eine Kamera mit Sichtfeldsteuerung zur Totwinkelüberwachung bei Kraftfahrzeugen bekannt. Ein Prisma zur Reflexion einfallenden Lichts aus einer linken und rechten Bilderfassungsrichtung ist an einem Fahrzeug angeordnet. Eine Ausrichtung einer Bilderfassungseinheit kann vertikal und schräg zu einer horizontalen Ebene verschwenkt werden, so dass mit der Bilderfassungseinheit Objekte oberhalb oder unterhalb dieser horizontalen Ebene erfassbar sind.

Eine Vorrichtung zur Überwachung einer Umgebung eines beweglichen Körpers ist aus der DE 601 01 440 T2 bekannt, wobei der bewegliche Körper vorzugsweise Personen oder Fracht transportiert, d. h. insbesondere ein Fahrzeug ist. Die Vorrichtung umfasst einen Bildprozessor, welcher derart betreibbar ist, dass dieser von zumindest einer Bilderfassungseinheit erfasste Bilddaten zu einer Anzeige des mobilen Körpers und seiner Umgebung in einer Vogelperspektive derart transformiert, dass eine Anzeigeinheit ein Bild des Körpers und seiner Umgebung in der Vogelperspektive anzeigt. Dabei ist das angezeigte Bild auch anhand einer Kombination eines ersten perspektivischen Bildes einer ersten Bilderfassungseinheit und eines zweiten perspektivischen Bildes einer zweiten Bilderfassungseinheit ermittelbar. Zu der Transformation der Bilddaten wird eine Nachschlage-Tabelle, welche auch als Look-Up-Table oder Umrechnungstabelle bekannt ist, verwendet.

Weiterhin offenbart die gattungsgemäße US 2008 043 113 A1 eine Vorrichtung und ein Verfahren, mittels denen Einzelbilder von einer vorderen Kamera und einer seitlichen Kamera, welche an einer vorderen und linken Seite eines Fahrzeugs angeordnet sind, in Gesamtbilder umgewandelt werden, die das Fahrzeug und dessen Umgebung aus einer Vogelperspektive darstellen. Zu einer möglichst vollständigen Erfassung der Umgebung des Fahrzeugs überlappen sich die Erfassungsbereiche der Kameras, wobei das aus der Vogelperspektive dargestellte Gesamtbild anhand einer Kombination der Einzelbilder gebildet wird. Die Umrechnung der Einzelbilder zu dem Gesamtbild erfolgt anhand von Daten einer Umrechnungstabelle.
Weiterhin ist aus der WO 2008020899 A1 eine so genannte WLC-Technologie (Wafer-Level-Camera) bekannt. Bei der WLC-Technologie werden die optischen Linsen direkt auf einem Wafer aufgesetzt. Ähnlich wie beim Aufbringen von Schaltkreisen auf den Wafer funktioniert auch die Produktion der Waferlevel Kameras. Dabei werden Tausende optische Linsen gleichzeitig auf einen Wafer aufgebracht, danach ausgerichtet und mit ihm verklebt. Durch eine so genannte WaferStack-Technologie entfällt die notwendige aber kostenintensive einzelne Montage und Ausrichtung der Linsen bei der herkömmlichen Herstellungsmethode. Schließlich werden die einzelnen Waferlevel Kameras aus dem Wafer ausgeschnitten und auf ein Sensormodul gesetzt. Großer Vorteil dieser Technik sind die geringen Kosten der Herstellung. Des Weiteren sind die Waferlevel Kameras mit einer Stärke von 2,5 Millimeter nur etwa halb so groß, wie die kleinsten herkömmlichen Kameramodule.
Der Erfindung liegt die Aufgabe zugrunde, eine verbesserte Vorrichtung zur Überwachung einer Umgebung eines Fahrzeugs anzugeben.
Die Aufgabe wird erfindungsgemäß durch eine Vorrichtung mit den Merkmalen des Anspruchs 1 gelöst.
Bevorzugte Ausgestaltungen und Weiterbildungen der Erfindung sind in den abhängigen Ansprüchen angegeben.
Bei einer erfindungsgemäßen Vorrichtung zur Überwachung einer Umgebung eines Fahrzeugs wird die Umgebung anhand von mehreren Bilderfassungseinheiten, deren Erfassungsbereiche sich zumindest teilweise überlappen und einen Überlappungsbereich bilden, erfasst, wobei aus mittels der Bilderfassungseinheiten erfassten Einzelbildern anhand einer Bildverarbeitungseinheit ein Gesamtbild erzeugt wird, welches das Fahrzeug und dessen Umgebung aus einer Vogelperspektive zeigt. Die Bilderfassungseinheiten sind erfindungsgemäß als Waferlevel Kameras ausgebildet.

Vorteilhafterweise verursachen die Waferlevel Kameras geringe Produktionskosten. Der Bauraumbedarf der Waferlevel Kameras ist so gering, dass mehrere derartige Waferlevel Kameras parallel in Form einer Linie nebeneinander im Fahrzeug angeordnet werden können.

Durch eine große Anzahl an verbauten Waferlevel Kameras lässt sich zweckmäßigerweise eine komplette Umgebung des Fahrzeugs erfassen, ohne komplizierte Schwenkmechanismen für eine einzelne Kamera zu benötigen.

Dadurch wird für den Fahrer eine verbesserte Rundumsicht geschaffen, die diesem als Assistenzfunktion bzw. Unterstützung während des Fahrbetriebes, beispielsweise bei einem Rangieren des Fahrzeugs, dient. Weiterhin können Unfälle vermieden werden, welche sich häufig aufgrund einer schlechten Rundumsicht, insbesondere bei großen und schwer überschaubaren Fahrzeugen, ereignen.

Im Folgenden wird ein Ausführungsbeispiel der Erfindung anhand einer Zeichnung näher erläutert.

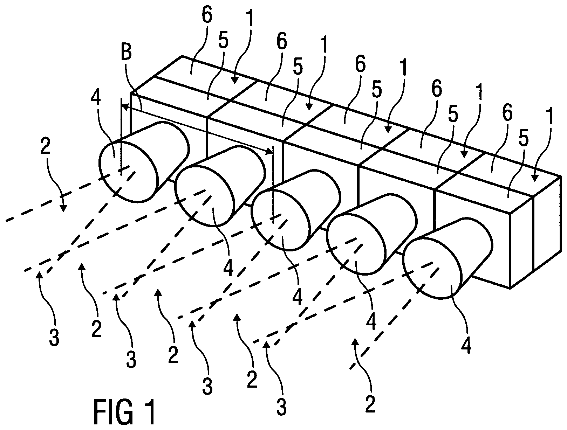

Dabei zeigt die einzige Figur 1 eine schematische Darstellung einer erfindungsgemäßen Linie aus mehreren Waferlevel Kameras.

Es werden mehrere, insbesondere 10 oder mehr, Waferlevel Kameras 1 in einer Linie angeordnet und nicht näher dargestellt an den Seiten einer Fahrzeugkarosserie integriert.

Durch die große Anzahl an Waferlevel Kameras 1 wird eine nicht näher dargestellte Umgebung des Fahrzeugs komplett erfasst. Dadurch werden tote Winkel in der Erfassung vermieden.

Die Waferlevel Kameras 1 werden mittels einer so genannten WLC-Technologie (Wafer-Level-Camera) hergestellt. Bei der WLC-Technologie werden die optischen Linsen 4 direkt auf einem Wafer 5 aufgesetzt. Ähnlich wie beim Aufbringen von Schaltkreisen auf den Wafer 5 funktioniert auch die Produktion der Waferlevel Kameras 1. Dabei werden tausende optische Linsen 4 gleichzeitig auf einen Wafer 5 aufgebracht, danach ausgerichtet und mit ihm verklebt. Durch eine so genannte WaferStack-Technologie entfällt die notwendige aber kostenintensive einzelne Montage und Ausrichtung der Linsen 4 bei der herkömmlichen Herstellungsmethode. Schließlich werden die einzelnen Waferlevel Kameras 1 aus dem Wafer ausgeschnitten und auf ein Sensormodul 6 gesetzt. Großer Vorteil dieser Technik sind die geringen Kosten der Herstellung. Des Weiteren sind die Waferlevel Kameras mit einer Stärke von 2,5 Millimeter nur etwa halb so groß, wie die kleinsten herkömmlichen Kameramodule.

Um die Umgebung des Fahrzeugs oder zumindest kritische Bereiche dieser Umgebung, die nicht im direkten Sichtfeld des Fahrzeugführers, also im so genannten toten Winkel, liegen, möglichst vollständig abzubilden, sind die Waferlevel Kameras 1 derart angeordnet und ausgerichtet, dass sich deren jeweils abgebildete Erfassungsbereiche 2 teilweise überlagern, d.h. Teilbereiche der abgebildeten Umgebung des Fahrzeugs werden von mehreren Kameras erfasst und bilden einen Überlappungsbereich 3.

Um einem Fahrer des Fahrzeugs insbesondere ein Rangieren mit diesem zu erleichtern oder beispielsweise eine verbesserte Übersicht an Ampelkreuzungen auf Objekte neben oder hinter dem Fahrzeug zu ermöglichen, erzeugt eine nicht näher dargestellte Bildverarbeitungseinheit aus mittels der Waferlevel Kameras 1 erfassten Einzelbildern ein Gesamtbild, welches das Fahrzeug und dessen Umgebung aus einer Vogelperspektive zeigt. Dieses Gesamtbild ist dem Fahrer des Fahrzeugs vorzugsweise auf einem Bildschirm ausgebbar.

Das Gesamtbild wird auf eine nicht näher dargestellte Anzeigevorrichtung, welche im Fahrzeug im Blickfeld des Fahrers angeordnet ist, übertragen. Als derartige Anzeigevorrichtung ist beispielsweise eine Anzeigevorrichtung eines Navigationssystems oder eines Rückfahrassistenzsystems nutzbar.

In einer weiteren Ausführungsform ist ein dargestelltes Bild der Waferlevel Kameras 1 auf der Anzeigevorrichtung mit Markierungen überblendbar, welche Abmessungen des Fahrzeugs, beispielsweise eine Breite und zusätzlich auch eine Höhe des Fahrzeugs darstellen, so dass der Fahrer schnell und eindeutig erfassen kann, ob sein Fahrzeug beispielsweise zwischen Hindernissen oder unter einem Hindernis hindurchpasst. In dieser Ausführungsform umfasst die Überwachungsvorrichtung beispielsweise zusätzlich eine Bildverarbeitungseinheit, um die Markierungen entsprechend einem jeweiligen dargestellten Bildausschnitt richtig zu positionieren.

In einer nicht näher dargestellten Weiterbildung der Erfindung wird das Fahrzeug in Fahrtrichtung auf der Anzeigeeinheit dargestellt, wobei der Fahrer des Fahrzeugs bevorzugt wählen kann, in welcher Darstellung ihm das Fahrzeug 1 und dessen Umgebung angezeigt werden soll.

In einer nicht näher dargestellten Ausgestaltung der Erfindung kann fahrsituationsabhängig von der Darstellung des Fahrzeugs und dessen Umgebung aus der Vogelperspektive auf eine Anzeige aus einem anderen Blickwinkel, beispielsweise auf ein Bild einer Rückfahrkamera, umgeschaltet werden, so dass der Fahrer des Fahrzeugs die Fahrsituation besser bewerten kann.

In einer bevorzugten Ausführungsform kann eine Stereoskopie angewandt werden. Dazu werden aus einer Linie von Waferlevel Kameras 1 die Bilder zweier Waferlevel Kameras 1 aufgenommen und an die Bildverarbeitungseinheit übermittelt.

Bei der Stereoskopie ist ein Abstand zwischen den beiden aufnehmenden Kameras, auch Basisbreite B genannt, wichtig. Diese Basisbreite B ist bei einer Linie von Waferlevel Kameras 1 variabel. Die Basisbreite B lässt sich einfach durch eine Ansteuerung unterschiedlicher Waferlevel Kameras 1 variieren. Beispielsweise können weit auseinander liegende Waferlevel Kameras 1 Bilder mit einer großen Basisbreite B aufnehmen. Analog dazu können eng beieinander liegende Waferlevel Kameras 1 Bilder mit einer kleinen Basisbreite B aufnehmen.

Vorteilhafterweise funktioniert diese Basisbreitenverstellung ohne aufwendige Mechanik zur Verstellung einer Kamera.

In einer weiteren vorteilhaften Ausführungsform sind die Waferlevel Kameras 1 einer Linie mit optischen Linsen 4 mit unterschiedlicher Brennweite ausgestattet. Dadurch können Bilder mit unterschiedlichen Brennweiten durch einfaches Umschalten zwischen den unterschiedlichen Waferlevel Kameras 1 aufgenommen werden.

Wegen der großen Datenmenge durch die aufgenommenen Bilder ist es zweckmäßig, die Bildverarbeitungseinheit in unmittelbarer räumlicher Nähe zu den Waferlevel Kameras 1 im Fahrzeug anzuordnen, um die Kabelanzahl und Länge gering zu halten. Alternativ ist auch eine drahtlose Datenübertragung zwischen Waferlevel Kameras 1 und Bildverarbeitungseinheit möglich.

### Bezugszeichenliste

- 1: Waferlevel Kamera
- 2: Erfassungsbereich
- 3: Überlappungsbereich
- 4: optische Linse
- 5: Wafer
- 6: Sensormodul

- B: Basisbreite

## Patentansprüche

1. Vorrichtung zur Überwachung einer Umgebung eines Fahrzeugs, wobei die Umgebung anhand von mehreren Bilderfassungseinheiten, deren Erfassungsbereiche (2) sich zumindest teilweise überlappen und einen Überlappungsbereich (3) bilden, erfasst wird, wobei aus mittels der Bilderfassungseinheiten erfassten Einzelbildern anhand einer Bildverarbeitungseinheit ein Gesamtbild erzeugt wird, welches das Fahrzeug und dessen Umgebung aus einer Vogelperspektive zeigt,
**dadurch gekennzeichnet,**
**dass** die Bilderfassungseinheiten als Waferlevel Kameras (1) ausgebildet sind, wobei mehrere der Waferlevel Kameras (1) parallel in Form einer Linie nebeneinander angeordnet sind.

2. Vorrichtung nach Anspruch 1,
**dadurch gekennzeichnet, dass** die Waferlevel Kameras (1) an den Seiten einer Fahrzeugkarosserie integriert angeordnet sind.

3. Vorrichtung nach einem der vorherigen Ansprüche,
**dadurch gekennzeichnet, dass** zwei Waferlevel Kameras (1) einer Linie Bilder aufnehmen und zur Anwendung von Stereoskopie an die Bildverarbeitungseinheit übermitteln, wobei eine Basisbreitenverstellung durch Ansteuerung der Waferlevel Kameras (1) der Linie realisiert wird.

4. Vorrichtung nach einem der vorherigen Ansprüche,
**dadurch gekennzeichnet, dass** die Waferlevel Kameras (1) einer Linie mit optischen Linsen (4) unterschiedlicher Brennweite ausgestattet sind

5. Vorrichtung nach einem der vorherigen Ansprüche,
**dadurch gekennzeichnet, dass** eine Anzeigevorrichtung zur Darstellung des Gesamtbilds vorgesehen ist.

6. Vorrichtung nach einem der vorherigen Ansprüche,
**dadurch gekennzeichnet, dass** die Bildverarbeitungseinheit in unmittelbarer räumlicher Nähe zu den Waferlevel Kameras (1) im Fahrzeug angeordnet ist.

## Claims

1. Device for monitoring an environment of a vehicle, wherein the environment is detected by means of several image detection units, the detection ranges (2) of which overlap at least partially and form an overlapping region (3), wherein an overall image showing the vehicle and its environment in a bird's eye view is generated by means of an image processing unit from individual images detected by the image detection units,
**characterised in that**
the image detection units are designed as wafer-level cameras (1), several of the wafer-level cameras (1) being arranged in parallel adjacent to one another in the form of a line.

2. Device according to claim 1,
**characterised in that**
the wafer-level cameras (1) are located in an integrated manner on the sides of a vehicle body.

3. Device according to any of the preceding claims,
**characterised in that**
two wafer-level cameras (1) of a line record images and transmit them to the image processing unit for using stereoscopy, a base width adjustment being implemented by activating the wafer-level cameras (1) of the line.

4. Device according to any of the preceding claims,
**characterised in that**
the wafer-level cameras (1) of the line are fitted with optical lenses (4) of different focal length.

5. Device according to any of the preceding claims,
**characterised in that**
a display device is provided for showing the overall image.

6. Device according to any of the preceding claims,
**characterised in that**
the image processing unit is located in the immediate vicinity of the wafer-level cameras (1) in the vehicle.

## Revendications

1. Dispositif de surveillance d'un environnement d'un véhicule automobile, l'environnement étant détecté au moyen de plusieurs unités de détection d'images dont les zones de détection (2) se chevauchent au moins à certains endroits et forment une zone de chevauchement (3), une image complète étant produite à l'aide d'une unité de traitement d'images à partir des images individuelles détectées au moyen des unités de détections d'image, ladite image complète représente le véhicule automobile et son environnement à partir d'une perspective aérienne, **caractérisé en ce que** les unités de détection d'images sont conçues en tant que caméras (1) au niveau tranche, certaines des caméras (1) au niveau tranche étant alignées parallèlement les unes à côtés des autres.

2. Procédé selon la revendication 1, **caractérisé en ce que** les caméras (1) au niveau tranche sont intégrées aux côtés d'une carrosserie de véhicule automobile.

3. Dispositif selon l'une quelconque des revendications précédentes, **caractérisé en ce que** les deux caméras (1) au niveau tranche d'une ligne enregistrent des images et les transmettent à l'unité de traitement d'images pour qu'elles soient appliquées à la stéréoscopie, un réglage de la largeur de base est réalisé par le guidage des caméras (1) au niveau tranche de la ligne.

4. Dispositif selon l'une quelconque des revendications précédentes, **caractérisé en ce que** les caméras (1) au niveau tranche d'une ligne sont équipées de lentilles optiques (4) de différentes distances focales.

5. Dispositif selon l'une quelconque des revendications précédentes, **caractérisé en ce qu'**il est prévu un écran destiné à représenter l'image complète.

6. Dispositif selon l'une quelconque des revendications précédentes, **caractérisé en ce que** l'unité de traitement d'images est disposée directement à proximité spatiale des caméras (1) au niveau tranche dans le véhicule automobile.
